# EUROPEAN PATENT APPLICATION

(11) **EP 1 168 743 A2**
(43) Date of publication of application: **02.01.2002**
(21) Application number: 01305638.7
(22) Date of filing: 28.06.2001
(51) Int. Cl.: H04L 27/00

(54) **Carrier recovery using pilot symbols**

(30) Priority: 30.06.2000 JP 2000199102
(71) Applicant: SONY CORPORATION, Tokyo 141 (JP)
(72) Inventor: Yoshimura, Osamu, Shinagawa-ku, Tokyo 141 (JP)
(74) Representative: DeVile, Jonathan Mark, Dr.

(57) **Abstract**

To improve reception characteristics of a radio communication terminal such as a portable telephone, synchronisation is performed at high speed, in order to compensate for a deterioration of transmission quality. When receiving a transmitted radio signal, which includes a pilot symbol added to transmission data, the phase of the pilot symbol is determined from the received signal. A synchronized time of the received signal is determined, based on the determined phase of the pilot signal. The received signal is demodulated with reference to the synchronized time.

## Description

### BACKGROUND OF THE INVENTION

### Field of the Invention

The present invention relates to a reception method and a receiving apparatus which are applied to radio communication terminal devices. More particularly but not exclusively, the present invention relates to a reception method and a receiving apparatus preferably applied to a cellular radio communication system based on CDMA (Code Division Multiple Access) method.

### Description of the Related Art

Recently, a market of mobile communication field makes rapid expansion. There is, however, a problem of fading peculiar to digital portable telephone system by radio.

In a transmission path which is affected by natural phenomena, buildings, etc. and so its state changes every moment if a mobile station such as a portable telephone moves while receiving a large number of different electric waves, the frequency of electric wave coming from the front is raised and the frequency of electric wave coming from the rear is lowered by the Doppler effect. Consequently, these electric waves are received respectively and combined together, so that the amplitude and phase are distorted, which makes the reception level fluctuated. This phenomenon is termed fading and causes deterioration of transmission quality.

To compensate for the deterioration of transmission quality which may be caused by such fading, in the mobile communication system, for example, convolution encoding is performed on transmission data at a base station on the transmitting side and also data recording is carried out by interleaving. Then, the resulting encoded bit sequence is modulated and thus on information symbol group is generated.

In the base station, a frame consisting of a pilot symbol is added to the information symbol group through another channel and then, the resulting transmission symbol group is subjected to filtering processing, digital-to-analog conversion processing and frequency conversion processing. Thus, a transmission signal of a predetermined frequency channel is generated and transmitted to a portable telephone through an antenna.

By the way, the pilot symbol which is added here is a symbol of a predetermined pattern which is already known to the portable telephone on the receiving side. The portable telephone is designed to be capable of estimating characteristics of fading by comparing the pilot symbol of the predetermined pattern with a'pilot symbol of reception data.

The portable telephone thus constructed tends to be affected by fading due to multipath because the characteristics of fading change to a large extent depending on a moving speed. This may sometimes raise a case where a receiver contained in a the portable telephone goes out of synchronism.

For this reason, the portable telephone involves a problem that it is difficult to compensate the deterioration of transmission quality originated from fading which is variable depending on the moving speed and so the reception characteristics cannot be improved.

### SUMMARY OF THE INVENTION

The present invention has been made in view of the above described point, and aims to provide a receiving apparatus and a reception method capable of improving the reception characteristics by carrying out a fast synchronism decision and compensating for the deterioration of transmission quality.

According to the present invention, the phase of a pilot symbol is decided from a received signal, a synchronized time of the received signal being decided based on the decided phase, and the received signal being demodulated with reference to that synchronized time.

By arranging in this way, the received signal can be demodulated at accurate timing based on the phase of pilot signal component as a reference.

The invention will now be described by way of example with reference to the accompanying drawings, throughout which like parts are referred to by like references, and in which:

### BRIEF DESCRIPTION OF THE DRAWINGS

FIG. 1 is an explanatory diagram showing a structure example of a digital portable telephone system according to an embodiment of the present invention;
FIG. 2 is a block diagram showing a structure example of a base station according to an embodiment of the present invention;
FIG. 3 is an explanatory diagram showing an example of a slot format of transmission signal according to an embodiment of the present invention;
FIG. 4 is a block diagram showing a structure example of a terminal station (portable telephone) according to an embodiment of the present invention;
FIG. 5 is a block diagram showing a structure example of a synchronism deciding circuit in the terminal station of FIG. 4;
FIG. 6 is an explanatory diagram showing an example of phases to be decided by a phase deciding circuit according to an embodiment of the present invention; and
FIG. 7 is a flow chart showing an example of synchronism deciding processing according to an embodiment of the present invention.

### DESCRIPTION OF THE PREFERRED EMBODIMENTS

An embodiment according to the present invention will be described below with reference to the accompanying drawings.

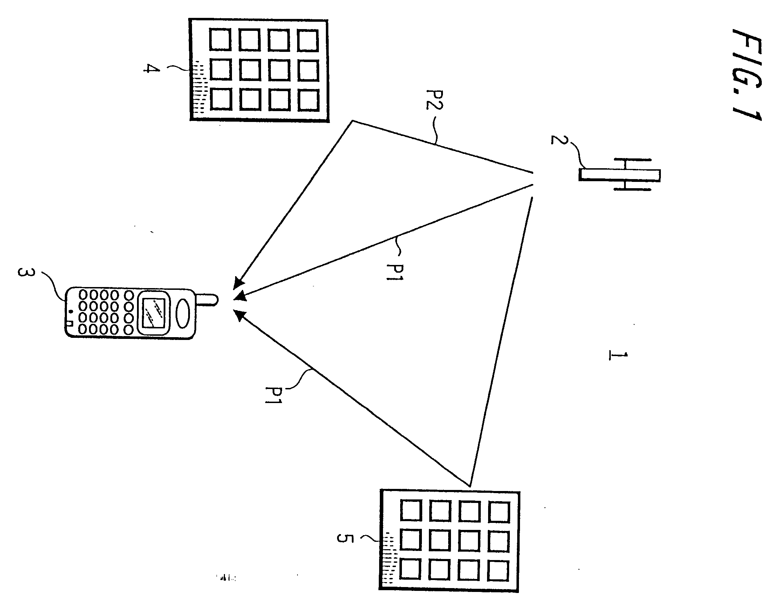

FIG. 1 shows the structure of a portable telephone system of this embodiment. In FIG. 1, a reference numeral 1 denotes an entire digital portable telephone system. The system is comprised of a base station 2 disposed in each cell provided by dividing an area for supplying communication service and a portable telephone 3 as a mobile station for making bidirectional communication with that base station 2.

As shown in FIG. 1, a signal which arrived from the base station 2 at the portable telephone 3 has a plurality of paths such as path P1 in which electric wave from the base station 2 directly arrives at the portable telephone 3, another path P2 in which electric wave from the base station 2 is reflected by a building 4 and then arrives at the base station 2, and another path P3 in which electric wave from the base station 2 is reflected by an other building 5 and then arrives at the base station 2.

In this connection, a transmitting side in the digital portable telephone system 1 divides temporally a channel of a predetermined frequency by the frame of a predetermined interval width and further divides that frame into time slots each having a predetermined time width for transmitting a transmission signal. In the following description, a time slot assigned for transmission purpose is referred to as transmission slot and a time slot of the received frame is referred to as reception slot.

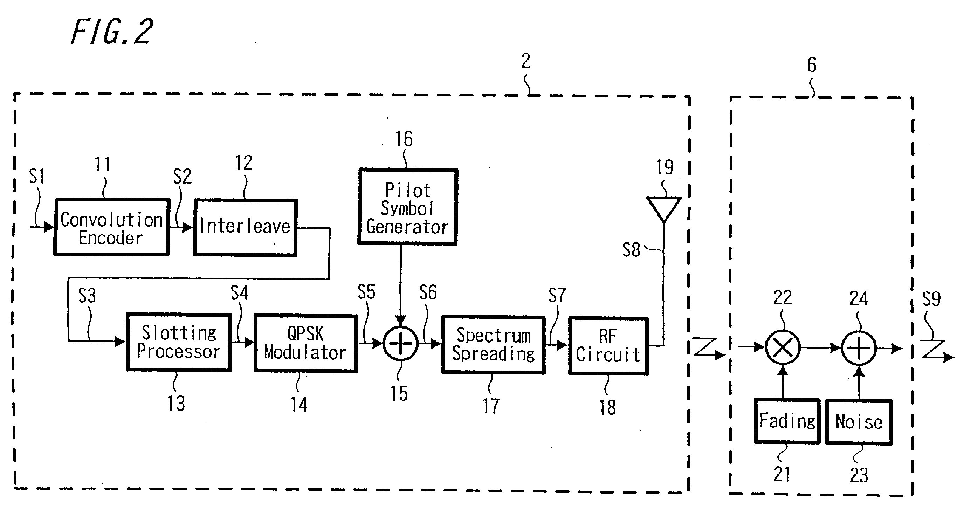

FIG. 2 is a diagram showing the structure of the base station 2 in the digital portable telephone system 1. As shown in FIG. 2, the base station 2 inputs an information bit sequence S1 which is transmission data into a convolution encoder circuit 11. The convolution encoder circuit 11 includes of a shift register having a predetermined number of stages and an exclusive OR circuit, executes the convolution encoding on the inputted information bit sequence S1 and encoded bit sequence S2 to an interleave buffer 12.

The interleave buffer 12 stores the encoded bit sequence S2 into an internal storage area sequentially. If the encoded bit sequence S2 has been stored in the entire storage area (that is, if the encoded bit sequence S2 has been accumulated up to a predetermined amount), the order of the encoded bit sequence S2 is recorded at random (hereinafter, this recording is referred to as interleave). The resulting encoded bit sequence S3, is supplied to a slotting processor circuit 13.

Incidentally, the interleave buffer 3 has a storage capacity sufficient for plural slots in order that the encoded bit sequence S3 can be distributed to plural transmission slots.

The slotting processor circuit 13 divides the encoded bit sequence S3 by the predetermined bit number so as to assign the encoded bit sequence S3 to transmission slots. The resulting encoded bit group S4 is supplied to a QPSK (Quadrature Phase Shift Keying) modulator circuit 14 in turn.

The QPSK modulator circuit 14 carries out QPSK modulation on the respective encoded bit groups S4 and supplies the resulting information symbol groups S5 result to an adder circuit 15 in turn.

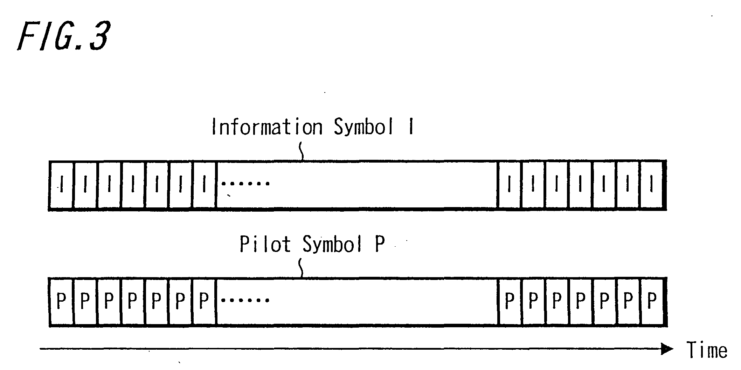

As shown in FIG. 3, the adder circuit 15 adds a pilot symbol P supplied from a pilot symbol generator circuit 16 to the information symbol group S5 divided depending on transmission slots and supplies the resulting transmission symbol group S6 obtained as a result to a spectrum spreading processor circuit 17 in turn.

In this case, the pilot symbol P which is added here is a symbol of a predetermined known pattern already know to the portable telephone 3 on the receiving side. By using the same pilot symbol P as a reference, the receiving side can the characteristics of the transmission path affected by fading and the like.

The spectrum spreading processor circuit 17 performs spectrum spreading operation by multiplying PN (Pseudo Noise) code generated by an internal PN code generator (not shown) and the transmission symbol groups S6 together and supplies the resulting wide band spread signal S7 to a RF (Radio Frequency: high frequency) circuit 18.

The RF circuit 18 generates a transmission signal by carrying out filtering operation and digital-to-analog conversion processing on the wide band spread signal S7, generates a transmission signal of a predetermined frequency channel S8 by converting the above transmission signal in terms of frequency, and then it transmits it through an antenna 19 by radio.

In general, a noise is introduced into the transmission signal S8 transmitted from the base station 2 and also that signals affected by fading in space. Specifically, because the space in which the transmission signal S8 is propagated can be regarded as equivalent to the transmission path 6, the transmission signal S8 will receive an effect from a fading generation source 21 in the form of multiplication by a multiplier 22 and receive a noise from a noise generation source 23 in the form of addition by an adder 24 when it is propagated.

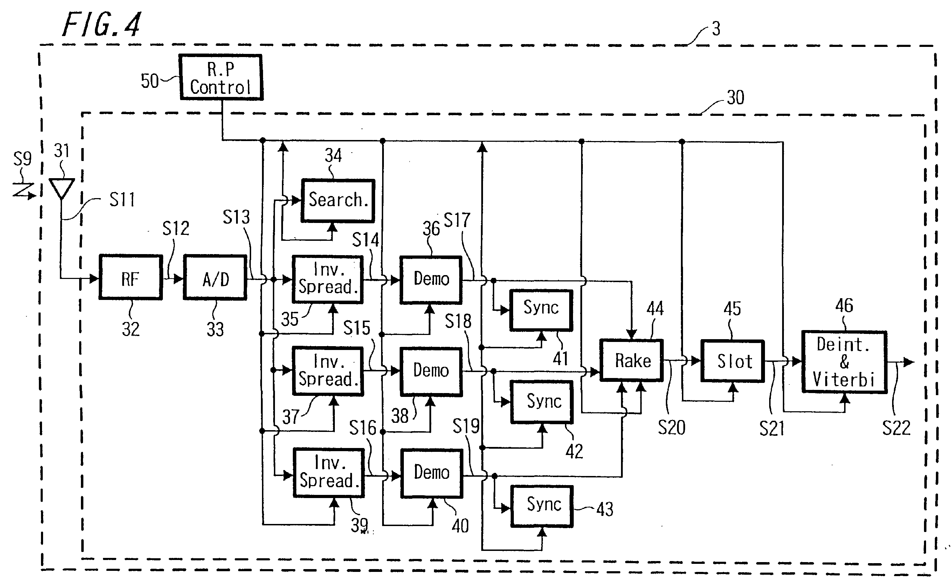

The transmission signal S8 propagated through the transmission path 6 in this way is received by an antenna 31 (see FIG. 4) of the portable telephone 3 as the transmission signal S9 which is affected by noise and fading.

Next, the structure of the portable telephone 3 which is a mobile station will be described with reference to FIG. 4. The portable telephone 3 supplies received signal S11 obtained by receiving the transmission signal S9 through the antenna 31 into the RF circuit 32 of a reception processing section 30. The RF circuit 32, after converting the received signal S11 up to base band in terms of frequency, takes out a wide band spread signal S12 corresponding to the aforementioned wide band spread signal S7 and supplies it to an analog-to-digital conversion circuit (A/D circuit) 33.

The A/D circuit 33 carries out analog-to-digital conversion processing on the wide band spread signal S12 and supplies the resulting digital wide band spread signal S13 to a searcher circuit 34 and an inverse spreading processor circuits 35, 37 and 39.

Next, the searcher circuit 34 is a matched filter comprised of plural-stage shift registers connected in parallel and a total adder, which calculates a correlation value by multiplying a local PN code and the wide band spread signal S13 together in parallel while shifting sequentially the phase of local PN code generated inside and adding the result. A time when the correlation value reaches a peak is notified to the inverse spreading processor circuits 35, 37, 39 and demodulator circuits 36, 38, 40 as a time when synchronism is acquired.

This causes the inverse spreading processor circuits 35, 37, 39 and the demodulator circuits 36, 38, 40 to start inverse spreading operation and demodulation processing based on the time notified from the searcher circuit 34.

The inverse spreading processor circuits 35, 37 and 39 are supplied with the wide band spread signal S13 in a divided manner from the A/D circuit 33. The inverse spreading processor circuit 35, 37 and 39 generate reception symbol groups S14, S15 and S16 corresponding to the transmission symbol group S6 (see FIG. 2) generated in the base station 2 by performing the inverse spreading operation on each path and supplies each of them to the demodulator circuits 36, 38 and 40, respectively.

The demodulator circuits 36, 38 and 40 carry out QPSK demodulation processing on the reception symbol groups S14, S15 and S16 and supplies the resulting encoded bit groups S17, S18 and S19 to synchronism deciding circuits 41, 42, 43 and a rake composer 44. Each of the encoded bit groups S17, S18 and S19 supplied to the synchronism deciding circuits 41, 42, 43 is an encoded bit group of the pilot symbol P and each of the encoded bit groups S17, S18, and S19 supplied to the rake composer 44 is an encoded bit group of information symbol.

In this connection, a group (a series) of the inverse spreading processor circuit 35, the demodulator circuit 36 and the synchronism deciding circuit 41 is usually called a finger circuit. The reception processing section 30 of the portable telephone 3 of this embodiment is provided with, for example, three groups of the finger circuits corresponding to the multipath.

However, because some transmission signal S9 reaching the portable telephone 3 through various paths in the multipath cannot be demodulated sufficiently as data, a processing to switch a path assigned to each finger circuit is necessary.

The synchronism deciding circuits 41, 42 and 43 detect a phase difference between the phase of the pilot symbol supplied from each demodulator circuit and a reference phase obtained from a past demodulation history and make the synchronism decision from the detected result. The result of synchronism decision is supplied to a reception processing control section 50. When the synchronism of any path assigned to the respective finger circuits comprised of combinations of the inverse spreading processor circuit 35 and the demodulator circuit 36, the inverse spreading processor circuit 37 and the demodulator circuit 38 and the inverse spreading processor circuit 39 and the demodulator circuit 40 goes off, the reception processing control section 50 controls to switch the rake composing circuit 44 so that a signal of the path out of synchronism may not be added.

Thus, because conditions of the multipath change instantly when moving at a predetermined speed, if the reception processing control section 50 can decide that synchronism of any path assigned to each finger circuit is off, it controls to switch the rake composing circuit 44 so that a signal of that path may not be added.

The demodulator circuits 36, 38 and 40 decide whether or not phase shift and amplitude shift arise in a demodulated result of the pilot symbol P in the reception symbol groups S14, S15 and S16 in order to perform a channel estimation.

The modulator circuits 36, 38 and 40 investigate the demodulated result of the pilot symbol P and if it is decided that a phase shift and amplitude shift occur relative to the phase and amplitude of a reference which they retains previously, the demodulator circuits 36, 38 and 40 restore the demodulated result of information symbol I following the pilot symbol P only by the amount corresponding to each of the phase shift and the amplitude shift and then supplies this as encoded bit groups S17, S18 and S19 to the rake composer 44.

The rake composer 44 combines the encoded bit groups S17, S18 and S19 supplied from the demodulator circuits 36, 38 and 40 while making the different arrival time, i.e. phase shift due to the multi-path into a synchronous state and supplies the resulting encoded bit group S20 to a slot connecting processor circuit 45.

The slot connecting processor circuit 45 is a circuit for connecting the encoded bit group S20 obtained fragmentarily in a unit of slot into a continuous signal. After accumulating the encoded bit group S20 only by the amount corresponding to a storage capacity of a deinterleave buffer of a deinterleave and viterbi decoder 46 on the next state, this circuit 45 connects these encoded bit groups S20 and supplies the resulting encoded bit sequence S21 to the deinterleave and viterbi decoder 46.

The deinterleave and viterbi decoder 46 have a storage capacity corresponding to plural slots and store the supplied encoded bit sequence S21 in an internal storage area sequentially. The encoded bit sequence S21 is recorded in reverse order to that carried out in the interleave buffer 13 of the base station 3 so as to restore it to original arrangement order. Considering thereafter trellis of a convolution code, the most probable state is estimated (so-called maximum likelihood sequence estimation) from all state transitions which can be taken as data so as to restore transmitted information bit sequence S22.

Although the digital portable telephone system 1 of this embodiment has been described only about transmission and reception in the direction from the base station 2 to the portable telephone 3 or in a so-called down direction, transmission and reception in an ordinary up direction from the portable telephone 3 to the base station 2 can also be carried out because the base station 2 contains a receiving circuit as well as the portable telephone 3 contains a transmitting circuit in actual practice.

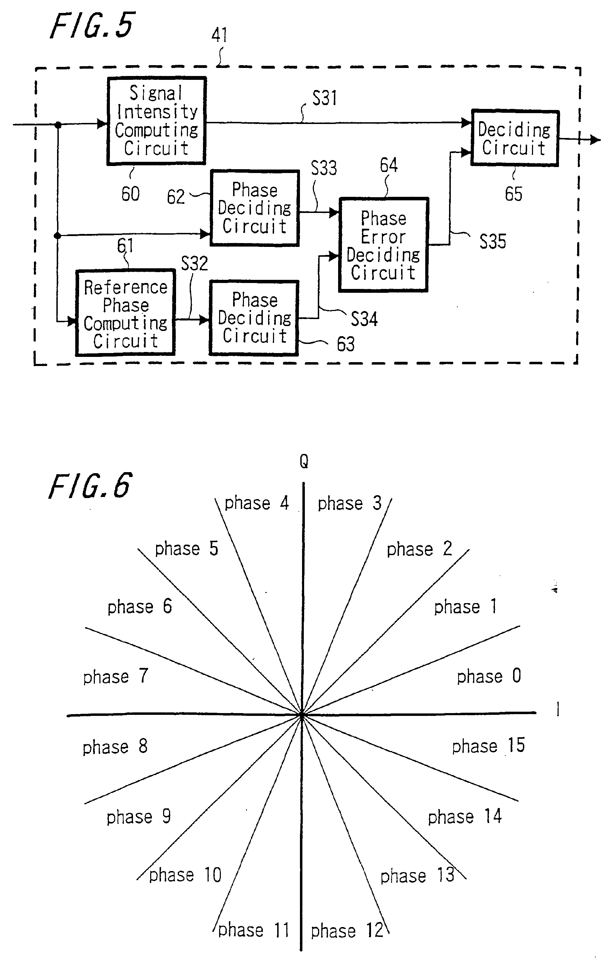

FIG. 5 is a block diagram showing the structure of one of the synchronism deciding circuits 41, 42 and 43 of this embodiment. A signal intensity computing circuit 60 computes a signal intensity of the pilot symbol group supplied from the demodulator circuits 36, 38 and 40 and supplies a signal intensity signal S31 to a deciding circuit 65.

A reference phase computing circuit 61 computes a reference phase relative to the pilot symbol group supplied from the demodulator circuit and supplies a reference phase signal S32 to a phase deciding circuit 63.

The phase deciding circuits 62, 63 convert value of a symbol as shown in FIG. 6 to phase information S33, S34 with respect to the pilot symbol group and the reference phase signal S32 supplied from the reference phase computing circuit. FIG. 6 shows an example of converting the symbol value to 16 phase values (Phase 0-15). Although, in the example of FIG. 6, a case where the phase information is divided into 16 phases is shown, it is permissible to obtain the phase information by dividing into other various number of phases than this case.

A phase error deciding circuit 64 decides the phase information S33 supplied from the phase deciding circuit 62 based on the reference phase information S34 supplied from the phase deciding circuit 63 and supplies the phase error information S35 to a deciding circuit 65.

The deciding circuit 65 performs the synchronism decision based on information S31 and S35 supplied from the signal intensity computing circuit 60 and the phase error deciding circuit 64 using threshold values set up by the reception processing control section 50. If the synchronism goes off, the reception processing control section 50 controls to switch the assignment from the finger circuit out of synchronism to a new one.

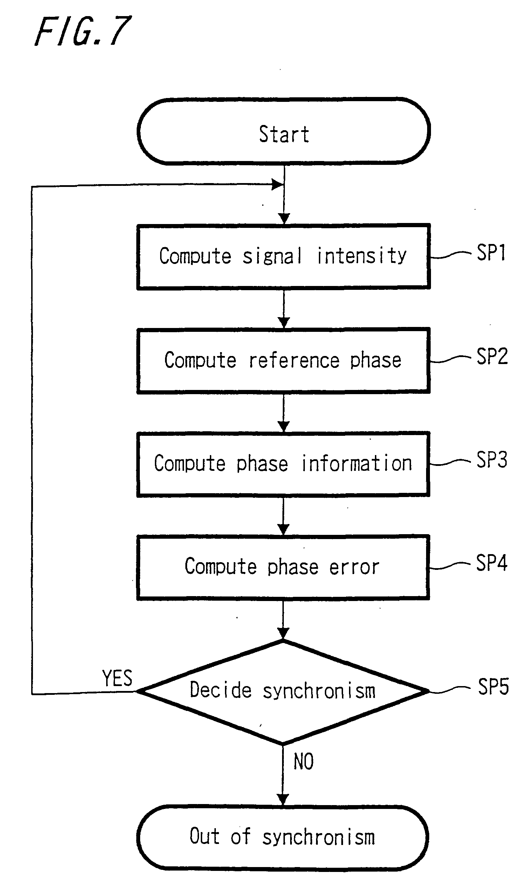

Next, its operation will be described with reference to a flow chart of FIG. 7. First of all, in step SP1, the signal intensity computing circuit 60 computes a signal intensity with respect to the pilot symbol group supplied from a demodulator circuit.

Next, in step SP2, the reference phase computing circuit 61 computes a reference phase relative to the pilot symbol group supplied from the demodulator circuit.

In the next step SP3, the phase deciding circuits 62, 63 convert the symbols supplied from the pilot symbol group and the reference phase computing circuit 61 to the phase information S33, S34.

In the next step SP4, the phase error deciding circuit 64 decides an error of the phase information S33 supplied from the phase deciding circuit 62 based on the reference phase information S34 supplied from the phase deciding circuit 63.

In the next step SP5, the deciding circuit 65 decides on synchronism based on information S31 and S35 supplied from the signal intensity computing circuit 60 and the phase error deciding circuit 64 using threshold values (a threshold value of signal intensity and a threshold value of phase error) set up by the reception processing control section 50. If the synchronism goes off, the reception processing control section 50 controls so as to switch the assignment from the a finger circuit out of synchronism to a new one. If the synchronous state is maintained, the processing returns to step SP1. In other words, the present invention takes only a finger signal as the received signal, which is synchronized in phase and has a signal intensity equal to or more than a predetermined threshold value.

According to the structure and processing described above, the portable telephone 3 can confirm the synchronous state of the finger itself based on synchronism information supplied from the synchronism deciding circuits 41, 42, 43 and execute the optimum reception processing matched with the state of a transmission path, thereby making it possible to much improve a reception characteristics which compensates for the deterioration of transmission quality. Further, because synchronism decision using received data bit is not carried out, time for restoring the information bit sequence S22 can be reduced, so that fast synchronism decision can be accomplished. Particularly, in a conventional receiving apparatus applied to this kind of system, synchronism word contained in received data is detected from a signal composed by the rake composer in order to detect synchronism based on timing of detecting that synchronism word. Thus, the multipath fading has also an influence on detection of synchronized time. In this embodiment, because the synchronized time is detected directly from each path before rake composing and only the sequence (finger) from which the synchronized time could have been detected satisfactorily is employed, rapid and satisfactory processing can be carried out.

In the above described embodiment, as detection of the synchronized time, phase detection of the pilot symbol contained in the received signal and detection of signal intensity which is amplitude information are carried out. However, it is permissible to detect the synchronized time from only detection of the phase in the pilot symbol.

Moreover, although the above described embodiment has the structure in which the receiving circuit is provided with plural fingers to rake-compose plural finger signals, the above described processing of detecting the synchronized time can be applied to a receiving structure which performs no rake composing (vector addition). It is arranged that processing to receive signal will not be performed if not synchronized.

Having described, in the above described embodiment, a radio communication terminal of cellular type having a synchronism detecting apparatus which is applied to a receiver for receiving a signal spread by a predetermined spreading code based on CDMA method, the processing may also be applied to a case where the synchronized time is detected in other type of radio system.

According to the present invention, the phase of a pilot symbol is decided from a received signal and the synchronized time of the received signal is decided based on that decided phase. Then, the received signal is demodulated with reference to the synchronized time. Consequently, the received signal can be demodulated satisfactorily at accurate timing based on the phase of the pilot symbol, so that the reception characteristics can be improved effectively.

In this case, signal intensity detection for detecting the signal intensity of the received signal is carried out and a synchronized time of the received signal is detected based on the phase decision and signal intensity detection. Therefore, the synchronized time can be detected further accurately, so that better demodulation can be carried out.

Moreover, the plural demodulated signal sequences are rake-composed and the phase decision is executed from the received signal of each sequence before this rake composing is performed. Thus, the synchronized time of each signal sequence before the rake composing can be detected satisfactorily.

Furthermore, when deciding synchronism a sequence in which the synchronized time cannot be detected under a predetermined state, is not rake-composed. Consequently, for example, a sequence in a poor reception state is not included in the received data, so that the optimum reception processing can be carried out irrespective of multipath fading conditions at that time and the deterioration of transmission quality is compensated, thereby enabling effective improvement of the reception characteristics to be made.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Various different aspects and features of the present invention are defined in the appended claims. Combinations of features from the dependent claims may be combined with features of the independent claims as appropriate and not merely as explicitly set out in the claims.

## Claims

1. A reception method for receiving a signal transmitted by radio with a pilot symbol added to transmission data, comprising:
a phase deciding step of deciding the phase of said pilot symbol from a received signal;
a synchronism deciding step of deciding a synchronized time of the received signal based on a phase and a reference phase obtained in said phase deciding step; and
a reception processing step of demodulating the received signal with reference to said synchronized time obtained in said synchronism deciding step.

2. A reception method according to claim 1, further comprising signal intensity detecting step of detecting a signal intensity of the received signal, wherein
that in said synchronism deciding step in such that the synchronized time of the received signal is detected based on a phase obtained in said phase deciding step and a signal intensity obtained in said signal intensity detecting step.

3. A reception method according to claim 1, further comprising rake composing step of rake-composing plural sequences of signals obtained in said reception processing step, wherein
the phase decision in said phase deciding step is carried out from the received signal of each sequence before being rake-composed in said rake composing step.

4. A reception method according to claim 3, wherein
sequence in which synchronous time cannot be detected in a predetermined state in said synchronism deciding step is not composed in said rake composing step.

5. A receiving apparatus for receiving a signal transmitted by radio with a pilot symbol added to transmission data, comprising:
phase deciding means for deciding the phase of a pilot symbol from a received signal;
synchronism deciding means for deciding a synchronized time of the received signal based on a phase decided by said phase deciding means; and
reception processing means for demodulating the received signal with reference to the synchronized time decided by the synchronism deciding means.

6. A receiving apparatus according to claim 5, further comprising a signal intensity detecting means for detecting the signal intensity of the received signal, wherein
said synchronism deciding means detects a timing synchronized time of the received signal based on the signal intensity detected by said signal intensity detecting means.

7. A receiving apparatus according to claim 5, further comprising a rake composing means for rake-composing plural sequences of signals demodulated by said reception processing means, wherein
the phase decision by the phase deciding means is carried out from the received signal of each sequence before being rake-composed by said rake composing means.

8. A receiving apparatus according to claim 7, wherein
a sequence in which the synchronized time cannot be detected in a predetermined state by said synchronism deciding means is not composed by said rake composing means.

9. A reception method for receiving a multipath signal transmitted with a pilot symbol added to transmission data, comprising:
a first step of comparing a phase of a received signal through respective paths of said multipath signal and a reference phase to detect their synchronism;
a second step of composing only a signal through a path in synchronism to generate a composite received signal depending on a synchronism detection result detected in said first step; and
a third step of decoding the composite received signal obtained in said second step.

10. A reception method according to claim 9, further comprising a fourth step of detecting a signal intensity of a signal through a path in synchronism, wherein
said second step is such that only a signal through a path in synchronism and having a signal intensity greater than a predetermined signal intensity is composed.
